# EUROPÄISCHE PATENTSCHRIFT

(11) **EP 3 990 761 B1**
(45) Veröffentlichungstag und Bekanntmachung des Hinweises auf die Patenterteilung: **31.05.2023**
(21) Anmeldenummer: 19735255.2
(22) Anmeldetag: 26.06.2019
(51) Int. Cl.: F16K 15/18, F01N 3/22, F02M 23/00, F02M 23/09, F02M 26/55, F16K 31/126, F01N 3/30

(54) **VENTILVORRICHTUNG FÜR EINE VERBRENNUNGSKRAFTMASCHINE**
VALVE DEVICE FOR AN INTERNAL COMBUSTION ENGINE
ENSEMBLE SOUPAPE CONÇU POUR UN MOTEUR À COMBUSTION INTERNE

(43) Veröffentlichungstag der Anmeldung: 04.05.2022
(73) Patentinhaber: Pierburg GmbH, 41460 Neuss (DE)
(72) Erfinder: HERRMANN, Berthold, 41460 Neuss (DE); CELIK, Halim, 41460 Neuss (DE); SASSENRATH, Kai, 41460 Neuss (DE); CUBUKCUOGLU, Ilker, 41460 Neuss (DE)
(74) Vertreter: terpatent Patentanwälte ter Smitten Eberlein-Van Hoof Rütten Daubert
(86) Internationale Anmeldenummer: PCT/EP2019/067025
(87) Internationale Veröffentlichungsnummer: WO 2020/259823

(56) Entgegenhaltungen:
- EP-A1- 1 462 624
- EP-A2- 2 014 887
- DE-A1- 10 148 384
- DE-A1- 10 202 031
- DE-A1- 10 225 161
- DE-A1-102006 024 728
- DE-A1-102008 024 035
- DE-B4- 10 148 384
- DE-B4-102008 024 035

## Beschreibung

Die Erfindung betrifft eine Ventilvorrichtung für eine Verbrennungskraftmaschine mit einem Gehäuse mit einem Einlass und einem Auslass, einem Ventilschließglied, welches auf einen Ventilsitz absenkbar und vom Ventilsitz abhebbar ist und einem pneumatisch betätigtem Aktor, über welchen das Ventilschließglied bewegbar ist, und welcher zumindest eine Membran aufweist, welche im Gehäuse eingespannt ist und einen Aktorraum in einen ersten Teilraum und einen zweiten Teilraum teilt.

Derartige Ventilvorrichtungen können in einer Vielzahl von Anwendungen zur Regelung von Flüssigkeiten oder Gasen in Kraftfahrzeugen, bei denen eine pneumatische Verstellung des Regelgliedes erfolgt genutzt werden. Ein Beispiel ist die Verwendung eines pneumatischen Aktors bei Sekundärluftventilen, die zur Schadstoffreduzierung eingesetzt werden, indem ein von einer Sekundärluftpumpe geförderter Luftstrom in den Abgastrakt geblasen wird, wobei das Ventil einerseits zur Regelung der Luftmenge genutzt wird und andererseits die Aufgabe hat, durch ein integriertes Rückschlagventil Schäden an der Sekundärluftpumpe durch Abgaspulsationen und einen daraus folgenden Rückstrom des Abgases in Richtung der Pumpe zu verhindern.

So sind auch abschaltbare Rückschlagventile bekannt geworden, bei denen die Rückschlagplatte innerhalb des Ventilschließgliedes angeordnet ist und somit nur bei geöffnetem Ventil wirksam wird. Problematisch bei diesen Ventilen war es, dass durch Eisbildung oder anhaftende Kondensate am Rückschlagventilkörper beziehungsweise zwischen dem Ventilsitz und dem Rückschlagventilkörper insbesondere bei länger geschlossenem Ventil ein Verkleben des Rückschlagventilkörpers am Ventilsitz erfolgen konnte.

Um dies zu verhindern, wurde in der DE 10 2006 021 467 A1 ein abschaltbares Rückschlagventil vorgeschlagen, welches ein Abstandselement aufweist, durch welches die Rückschlagplatte leicht vom Ventilsitz abgehoben wird, wenn das Ventilschließglied sich im geschlossenen Zustand befindet. Hierzu ist das Abstandselement mit einem Formveränderungselement verbunden, durch welches das Abstandselement in Richtung der Rückschlagplatte bewegbar oder von diesem entfernbar ist. Insbesondere erfolgt dies, indem eine Steuerkammer, welche zur Betätigung des Schließgliedes mit einem Unterdruck beaufschlagt wird, mit einem Balg verbunden ist, dessen Länge derart gewählt ist, dass er in seiner Normalstellung gegen die Rückschlagplatte anliegt und diese vom Sitz abhebt. Bei Anlegen eines Unterdrucks in die Steuerkammer wird der Balg zusammengezogen, so dass die Rückschlagplatte ihre normale Funktion übernehmen kann. Entsprechend sind entweder zusätzliche Aktoren zu verwenden oder es ergeben sich weitere Anschlüsse, die zu Undichtigkeiten führen können.

Als Weiterentwicklung dieses Ventils wurde in der DE 10 2016 103 549 B3 eine Ventilvorrichtung vorgeschlagen, bei der die Abstandselemente an einer Membran befestigt sind, die den Steuerraum des Aktors begrenzt, so dass bei Betätigung des Aktors durch Anlegen eines Vakuums einerseits das Ventilschließglied vom Ventilsitz abgehoben wird und andererseits die Abstandselemente zurückgezogen werden, wodurch die Rückschlagplatte als Rückschlagventil funktioniert. Bei Anlegen von Atmosphärendruck werden hingegen die Abstandselemente durch eine Feder gegen die Rückschlagplatte gedrückt, so dass diese beabstandet vom Ventilsitz angeordnet ist, wenn das Ventilschließglied sich im geschlossenen Zustand befindet.

Es hat sich jedoch gezeigt, dass diese Kondensate nicht nur an der Rückschlagplatte zu einem Verkleben führen können, sondern auch die Membran betreffen können, über die die Abstandselemente betätigt werden. Auch die Stellmembranen von pneumatischen Aktoren können hiervon betroffen sein, wenn sie in einer entspannten Lage, also beispielsweise nach dem Abschalten des Verbrennungsmotors, gegen eine Wandfläche des Aktors anliegen und dort auskühlen, so dass anfallende Kondensate in diesem Bereich gefrieren können oder sich Verklebungen durch Verschmutzungen zwischen der Membran und dem Aktorgehäuse entstehen, was zu einem Hängenbleiben der Membran und somit zum Funktionsausfall des zu betätigenden Gliedes führt.

Es stellt sich daher die Aufgabe, eine Ventilvorrichtung zu schaffen, mit der eine zuverlässige Funktion des Aktors über eine lange Lebensdauer auch bei anfallenden Kondensaten, Schmutzstoffen oder Eisbildung sichergestellt werden kann. Entsprechend soll ein Kleben der Membran am Gehäuse zuverlässig vermieden werden.

Diese Aufgabe wird durch eine Ventilvorrichtung mit den Merkmalen des Hauptanspruchs 1 gelöst.

Dadurch, dass an einer Grundfläche des Gehäuses zumindest ein sich axial von der Grundfläche in Richtung der Membran erhebender Vorsprung ausgebildet ist, auf dem die Membran in zumindest einer ihrer Endstellungen am Gehäuse aufliegt, wobei in der Grundfläche ein Ablauf ausgebildet ist, über den eine fluidische Verbindung zwischen dem zweiten Teilraum und dem Einlass oder Auslass besteht, wird erreicht, dass die Fläche, an der die Membran gegebenenfalls aufgrund der vorhandenen Dämpfe, in denen klebrige Substanzen enthalten sein können oder welche bei geringen Temperaturen gefrieren können, festklebt, reduziert wird. Dies verringert deutlich das Risiko eines Festhaftens der Membran. Des Weiteren wird durch den Ablauf kondensiertes Wasser gegebenenfalls mit den Schmutzstoffen zum Einlass oder Auslass und damit bei Verwendung als Sekundärluftventil in Richtung des Abgastraktes abgeführt. Durch diesen Ablauf wird entsprechend ein Eigenklima in dem Raum, der zumindest einseitig durch die Membran geschlossen ist, verhindert und damit die Korrosionsgefahr reduziert. Zusätzlich erfolgt ein Druckausgleich zum Einlass oder Auslass.

Vorzugsweise ist der zweite Teilraum durch die Membran und eine zur Membran gegenüberliegende Grundfläche des Gehäuses begrenzt. Entsprechend bildet der erste Teilraum den Steuerraum, während im zweiten Teilraum zuverlässig ein Kleben der Membran oder ein entstehendes Eigenklima verhindert werden.

In einer bevorzugten Ausführung der Erfindung erstreckt sich der Ablauf von einer geodätisch tiefsten Position der Grundfläche aus in Richtung des Einlasses oder des Auslasses und ist eine den Ablauf begrenzende Wand zum Einlass oder zum Auslass hin abfallend ausgebildet. Unter geodätisch tiefster Position wird in diesem Zusammenhang ein Bezug zum Erdmittelpunkt verstanden. Der Ablauf erstreckt sich entsprechend von einer Position der Grundfläche aus, die im eingebauten Zustand des Ventils näher zum Erdmittelpunkt angeordnet ist als die übrige Grundfläche. Entsprechend werden vorhandene Flüssigkeiten aufgrund der Schwerkraft von der Grundfläche oder dem Teilraum zu diesem Ablauf strömen und von dort aufgrund der Erstreckungsrichtung des Ablaufes zum Einlass beziehungsweise Auslass strömen, wo sie abgeführt werden. Der Bezug zum Erdmittelpunkt bezieht sich selbstverständlich immer auf den eingebauten Zustand des Ventils.

Entsprechend ist es auch bevorzugt, wenn sich der zumindest eine Vorsprung von der Grundfläche in eine geodätisch über der Grundfläche liegende Position erstreckt. Dies bedeutet, dass sich keine Flüssigkeit auf den Vorsprüngen absetzen kann, so dass diese nicht zu Verklebungen mit der Membran neigen, da keine gelösten klebrigen Substanzen an dieser Position durch Verdampfen der Flüssigkeit an dieser Position anhaften können, da diese entsprechend der Schwerkraft in Richtung der Grundfläche abgeführt würden.

Vorteilhaft ist es auch, wenn sich von der Grundfläche mehrere ringförmige Vorsprünge in Richtung der Membran erstrecken, welche gleichmäßig über den Umfang der Grundfläche verteilt sind. Diese Vorsprünge dienen dann als kleine Auflageflächen der Membrane, wobei eine gleichmäßige Belastung der Vorsprünge und der Membran durch die gleichmäßige Verteilung der Vorsprünge hergestellt wird. Gleichzeitig wird auch verhindert, dass die Membran in von einem Vorsprung entfernten Bereich gegebenenfalls auf der nicht erhabenen Grundfläche aufliegt.

Vorzugsweise weist die Ventilvorrichtung eine Ventilstange auf, über die die Membran mit dem Ventilschließglied verbunden ist. Dies bedeutet, dass die zur Betätigung des Ventils verwendete Membran an einem Kleben gehindert wird. Ein derartiger pneumatischer Steller ist besonders einfach aufgebaut.

In einer alternativen vorteilhaften Ausführungsform weist die Ventilvorrichtung eine Rückschlagplatte auf, welche über eine Federkraft in Richtung eines zweiten Ventilsitzes belastet ist, und einen Durchströmungsquerschnitt zwischen dem Einlass und dem Auslass auf, welcher durch das Ventilschließglied und die Rückschlagplatte freigebbar oder verschließbar ist, und zumindest ein pneumatisch betätigbares Abstandselement auf, über welches die Rückschlagplatte bei auf dem ersten Ventilsitz aufliegendem Ventilschließglied entgegen der Federkraft vom zweiten Ventilsitz abgehoben ist, wobei das Abstandselement mit der Membran verbunden ist, welche in zumindest einer Ihrer Endstellungen am Gehäuse auf den Vorsprüngen aufliegt. Dies bedeutet, dass der zweite Teilraum unterhalb der Membran liegt, über welche die Abstandselemente betätigt werden. Ein Kleben dieser Membran wird so zuverlässig verhindert.

Bei dieser Ausführung ist es besonders vorteilhaft, wenn das Abstandselement durch eine Öffnung in der Grundfläche ragt, welche an der zur Membran weisenden Seite durch den sich in Richtung der Membran axial erhebenden Vorsprung radial begrenzt ist. Die Vorsprünge umrahmen entsprechend die Durchgangsöffnungen durch die die Abstandselemente gesteckt werden. Zusätzliche Vorsprünge müssen somit nicht hergestellt werden, so dass die Form zur Herstellung vereinfacht wird. Zusätzlich werden diese Vorsprünge als Auflageflächen zur Begrenzung der Hubbewegung der Abstandselemente benutzt, so dass eine Auflage der Membran in diesem Bereich absichtlich geschaffen wird. Die Vorsprünge erfüllen entsprechend zwei Funktionen in einem Bauteil.

Vorzugsweise weist die Ventilvorrichtung eine erste Membran auf, die mit der Ventilstange verbunden ist und eine zweite Membran auf, die mit dem zumindest einen Abstandselement verbunden ist und welche in zumindest einer ihrer Endstellungen am Gehäuse auf den Vorsprüngen aufliegt, wobei die erste Membran und die zweite Membran eine Steuerkammer des pneumatischen Aktors begrenzen, welche den ersten Teilraum bildet. Eine Fehlfunktion aufgrund eines Haftens der zweiten Membran an der Grundfläche wird in dieser Ausführung ausgeschlossen.

In einer weiterführenden Ausführung weist das Abstandselement mindestens einen Arm auf, der gegen die Rückschlagplatte bewegbar ist. Dieser Arm kann direkt mit der zweiten Membran verbunden werden, wodurch die Montage und Herstellung der Ventilvorrichtung vereinfacht werden.

Vorzugsweise ist die zweite Membran an ihrem Innenumfang und an ihrem Außenumfang zwischen dem Gehäuse und einem Befestigungselement eingespannt. Hierdurch wird auch die Befestigung der Membran im Ventil sehr einfach hergestellt.

Besonders vorteilhaft ist es, wenn drei Arme um 120° versetzt zueinander angeordnet sind, die durch drei Öffnungen in der Grundfläche ragen, die jeweils an der zur Membran weisenden Seite durch die sich in Richtung der Membran axial erhebenden Vorsprünge radial begrenzt sind. Durch diese Anordnung der Arme wird sichergestellt, dass die Rückschlagplatte vollständig und nicht nur teilweise vom Sitz abgehoben wird. Gleichzeitig wird auch sichergestellt, dass die Membran ausschließlich auf den entsprechend angeordneten Vorsprüngen aufliegt und von der Grundfläche beabstandet ist, so dass ein Verkleben zuverlässig verhindert wird.

Es wird somit eine Ventilvorrichtung für eine Verbrennungskraftmaschine geschaffen, welche unempfindlich gegen Verschmutzungen, Kondensate oder Eisbildung ist und dessen Funktionsweise bereits unmittelbar nach dem Start der Verbrennungskraftmaschine unabhängig von den Umgebungstemperaturen zur Verfügung steht, da ein Festkleben der Membran an der Grundfläche durch anfallende Kondensate und darin gelöste verklebende Substanzen verhindert wird. Somit bleibt auch die Funktion der Abstandselemente und damit der Rückschlagplatte zuverlässig erhalten.

Ein Ausführungsbeispiel einer erfindungsgemäßen Ventilvorrichtung ist in den Figuren dargestellt und wird nachfolgend beschrieben.

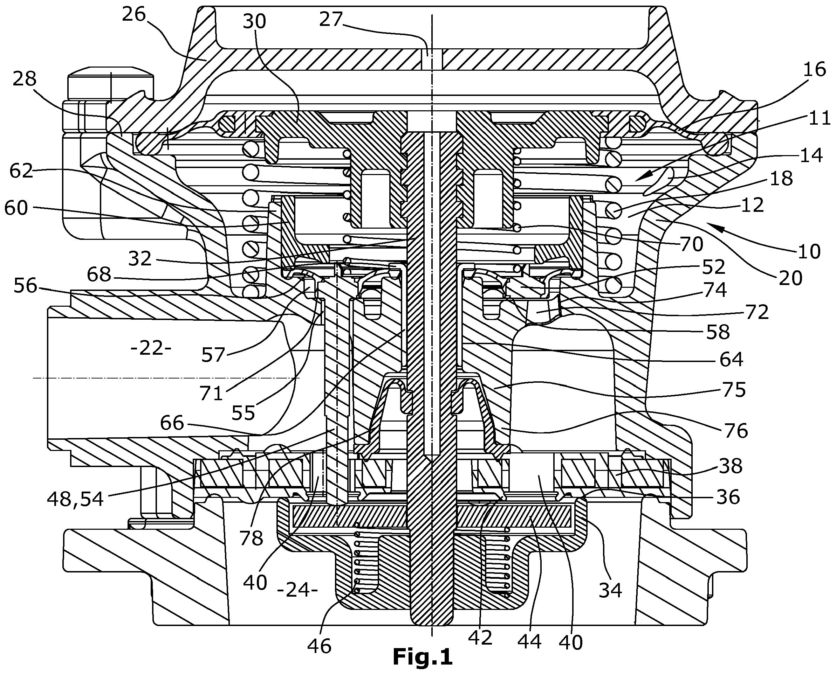

Figur 1 zeigt eine Seitenansicht einer erfindungsgemäßen Ventilvorrichtung in geschnittener Darstellung.

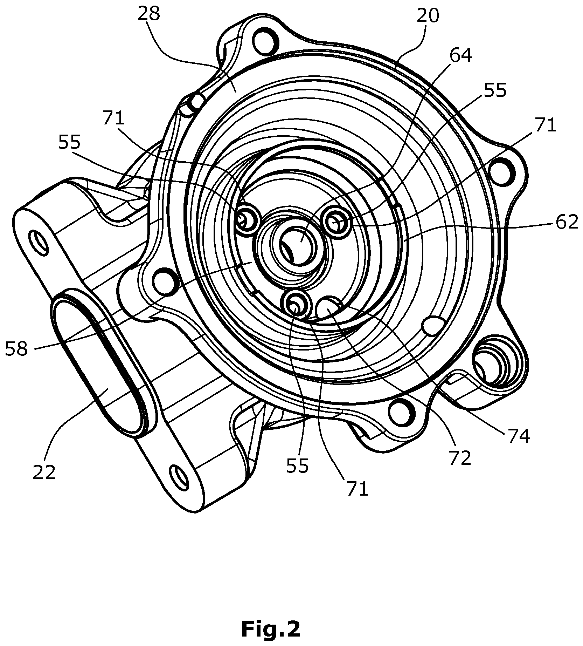

Figur 2 zeigt eine perspektivische Darstellung des Gehäuses der Ventilvorrichtung gemäß Figur 1.

Die erfindungsgemäße Ventilvorrichtung besteht aus einem pneumatisch betätigbaren Aktor 10 mit einem Aktorraum 11, in dem eine Steuerkammer 12 ausgebildet ist, in welche ein Unterdruck über einen Anschlussstutzen 14 beispielsweise aus einer Vakuumpumpe über eine elektrisches Umschaltventil eingeleitet werden kann, der auf eine erste Membran 16 wirkt, welche durch den Unterdruck entgegen einer Federkraft einer ersten Feder 18 verformt wird. Der Aktorraum 11 wird durch ein Gehäuse 20 begrenzt, welches auch eine Auflagefläche für die erste Feder 18 aufweist und gleichzeitig ein Strömungsgehäuse der Ventilvorrichtung bildet, welches einen Einlass 22 und einen Auslass 24 aufweist. Aktorseitig wird das Gehäuse 20 durch einen Deckel 26 verschlossen, wobei zwischen dem Deckel 26 und einem ringförmigen Rand 28 des Gehäuses 20 die erste Membran 16 an ihrem Außenumfang eingeklemmt ist.

Im Deckel 26 ist eine Öffnung 27 ausgebildet, so dass in dem Bereich des Aktorraums 11 zwischen dem Deckel 26 und der ersten Membran 16 Atmosphärendruck herrscht. Der Innenumfang der Membran 16 ist an einen Ventilstangenträger 30 angespritzt, an welchem eine Ventilstange 32 befestigt ist und der als zweite Auflagefläche für das entgegengesetzte Ende der ersten Feder 18 dient, über welche die Ventilstange 32 in Richtung des Deckels 26 belastet ist.

Am zum Aktor 10 entgegengesetzten Ende der Ventilstange 32 ist ein Ventilschließglied 34 befestigt, welches mit einem ersten Ventilsitz 36 zusammenwirkt, der an einer Ventilplatte 38 ausgebildet ist, welche im Gehäuse 20 befestigt ist und Durchströmungsquerschnitte 40 aufweist, über die der Einlass 22 mit dem Auslass 24 durch Abheben des Ventilschließgliedes 34 vom Ventilsitz 36 verbindbar ist. An der Ventilplatte 38 ist zusätzlich ein konzentrisch innerhalb des ersten Ventilsitzes 36 angeordneter zweiter Ventilsitz 42 ausgebildet, der mit einer als Rückschlagventil wirkenden Rückschlagplatte 44 korrespondiert, welche über ein Federelement 46 in Richtung des zweiten Ventilsitzes 42 belastet wird und auf der Ventilstange 32 gelagert ist. Dieses Federelement 46 stützt sich mit seinem gegenüberliegenden axialen Ende am Ventilschließglied 34 ab und ist radial ebenso wie die Rückschlagplatte 44 im den Durchströmungsquerschnitt 40 verschließenden Zustand des Ventilschließgliedes 34 von diesem umgeben.

Die Rückschlagplatte 44 wird entsprechend bei geschlossenem Ventilschließglied 34 und damit in Normalstellung des Aktors 10, in der kein Vakuum in der Steuerkammer 12 anliegt, durch das Federelement 46 gegen den zweiten Ventilsitz 42 belastet. Da dies insbesondere der Fall ist, wenn sich die Ventilvorrichtung im abgeschalteten Zustand des Verbrennungsmotors befindet, können durch Verunreinigungen aus dem Abgas oder durch gefrierende Flüssigkeiten Anhaftungen zwischen dem zweiten Ventilsitz 42 und der Rückschlagplatte 44 entstehen, die eine korrekte Funktionsweise des Rückschlagventils bei einem anschließenden Start des Verbrennungsmotors verhindern.

Aus diesem Grund wird ein pneumatisch betätigbares Abstandselement 48 im Gehäuse 20 zusätzlich montiert, dessen axiales Ende bei abgeschaltetem Ventil beziehungsweise bei geschlossenem Ventilschließglied 34 gegen die Rückschlagplatte 44 anliegt und diese vom zweiten Ventilsitz 42 entfernt, so dass ein Spalt 50 zwischen dem zweiten Ventilsitz 42 und der Rückschlagplatte 44 gebildet wird.

Das Abstandselement 48 besteht aus einem ringförmigen Trägerelement 52, von dem aus sich drei Arme 54 einander gegenüberliegend durch drei Öffnungen 55, die sich von einer Grundfläche 58 aus dem Aktorraum 11 und durch das Gehäuse 20 in Richtung der Rückschlagplatte 44 erstrecken. Es könnten auch beispielsweise zwei oder mehr als drei Arme 54 ausgebildet werden, welche üblicherweise gleichmäßig über den Umfang verteilt werden. Das ringförmige Trägerelement 52 ist an einer zweiten Membran 56 befestigt, welche die Steuerkammer 12 in Richtung des Ventilschließgliedes 34 radial innerhalb der ersten Feder 18 begrenzt und somit die Steuerkammer 12 als ersten Teilraum von einem zweiten Teilraum 57 des Aktorraums 11 trennt, der somit zwischen der Grundfläche 58 des Gehäuses 20 und der zweiten Membran 56 ausgebildet wird. Diese zweite Membran 56 ist an ihrem Außenumfang zwischen der Grundfläche 58 des Gehäuses 20 und einem Befestigungsring 60 eingeklemmt, der in einen entsprechenden sich in die Steuerkammer 12 erstreckende ringförmige Erhebung 62 des Gehäuses 20, welcher von der ersten Feder 18 umgeben ist und sich von der Grundfläche 58 in Richtung der ersten Membran 16 erstreckt, eingepresst ist und die zweite Membran 56 entsprechend nach radial außen umgibt. Am Innenumfang ist die zweite Membran 56 axial zwischen der Grundfläche 58 des Gehäuses 20, in dem auch eine Aufnahmebohrung 64 zur Aufnahme einer Gleitbuchse 66, in der die Ventilstange 32 geführt wird, und einem nach radial außen stehenden Kragen 68 dieser Gleitbuchse 66, der als Befestigungselement dient, eingeklemmt.

In der Steuerkammer 12 ist eine zweite Feder 70 angeordnet, die sich einerseits an der zweiten Membran 56 beziehungsweise dem Trägerelement 52 abstützt und an der entgegengesetzten Seite gegen den Ventilstangenträger 30 anliegt. Diese zweite Feder 70 weist eine größere Federkraft als das auf die Rückschlagplatte 44 wirkende Federelement 46 auf, wodurch sichergestellt wird, dass bei Betätigung der zweiten Membran 56 durch die zweite Feder 70 die Rückschlagplatte 44 vom Ventilsitz 42 abgehoben wird und nicht auf diesen aufgepresst wird. Wird ein Vakuum in der Steuerkammer 12 gezogen, wird entsprechend einerseits die Ventilstange 32 derart bewegt, dass das Ventilschließglied 34 vom ersten Ventilsitz 36 abgehoben wird und andererseits das Abstandselement 48 in entgegengesetzter Richtung gezogen, wodurch die Rückschlagplatte 44 durch das Federelement 46 auf den Ventilsitz 42 gedrückt wird und gegen diesen anliegt, solange nicht die durch den geförderten Luftstrom entstehende Luftdruck eine Kraft auf die Rückschlagplatte 44 ausübt, welche die Kraft des Federelementes 46 übersteigt.

Die Anordnung der zweiten Membran 56 sorgt gleichzeitig dafür, dass keine Kondensate oder Verschmutzungen enthaltende Dämpfe in die Steuerkammer 12 eindringen können. Allerdings können solche Dämpfe und Kondensate in den zweiten Teilraum 57 zwischen der Grundfläche 58 und der zweiten Membran 56 eindringen. Dies kann bei bekannten Ventilen dieser Bauform dazu führen, dass sich insbesondere im abgeschalteten Zustand der Verbrennungskraftmaschine Verklebungen zwischen der Membran 56 und der Grundfläche 58 bilden, da in diesem Zustand die Arme 54 gegen die Rückschlagplatte 44 anliegen und die zweite Membran 56 auf der Grundfläche 58 aufliegt.

Die Verklebungen entstehen dabei entweder durch Verdampfung der Kondensate und daraus folgender Ablagerung der Verschmutzungen oder bei Minustemperaturen durch Gefrieren der Kondensate und daraus folgender Eisbildung zwischen der Membran 56 und der Grundfläche 58.

Um dies zu verhindern, sind um die Öffnungen 55 herum schmale Vorsprünge 71 ausgebildet, die sich von der Grundfläche 58 axial in Richtung der zweiten Membran 56 erstrecken und zwar in einen geodätisch oberhalb der Grundfläche 58 angeordneten Bereich. Dies bedeutet, dass die obere begrenzende Fläche der Vorsprünge 71 einen größeren Abstand zum Erdmittelpunkt aufweist als die Grundfläche 58. Dies hat zur Folge, dass sich auf den Vorsprüngen 71 kein Kondensat oder dergleichen absetzen und verdampfen oder frieren kann, da dieses der Schwerkraft folgend zuvor zur Grundfläche 58 abströmt.

Zusätzlich ist in der Grundfläche 58 ein Ablauf 72 ausgebildet, der sich von der Grundfläche 58 durch das Gehäuse zum Einlass 22 der Ventilvorrichtung erstreckt. Dieser Ablauf 72 ist als Kanal ausgeformt, dessen begrenzende Wände 74 zum Einlass 22 abfallend ausgebildet sind. Dies bedeutet, dass der Ursprung des Ablaufs 72 im eingebauten Zustand der Ventilvorrichtung an einer geodätisch im Vergleich zur übrigen Grundfläche 58 niedrigsten Position ausgebildet ist und sich der Einlass 22 geodätisch unterhalb des Ablaufs 72 befindet, so dass anfallendes Kondensat mit den darin gelösten Verschmutzungen immer aus dem Teilraum 57 von den Vorsprüngen 71 über den Ablauf 72 und zum Einlass 22 abgeführt wird. Entsprechend werden Verklebungen der Membran 56 zuverlässig verhindert.

Verschmutzungen könnten auch direkt entlang der Ventilstange 32 und zwar zwischen dieser und der Gleitbuchse 66 direkt in den Steuerkammer 12 gelangen, was jedoch dadurch verhindert wird, dass sich von einem innerer Gehäuseabschnitt 76 in Richtung der Ventilplatte 38 erstreckt, der kurz vor der Ventilplatte 38 endet und zwischen dessen Ende und der Ventilplatte 38 der Außenumfang einer dritten Membran 78 eingeklemmt ist, deren Innenumfang an der Ventilstange 32 dichtend befestigt ist. Entsprechend wird der Führungsbereich der Ventilstange 32 durch die zweite Membran 56 und die dritte Membran 78 vollständig abgedichtet.

Soll im Betrieb beispielsweise ein Sekundärluftstrom in den Abgasbereich des Verbrennungsmotors eingeleitet werden, wird in der Steuerkammer 12 ein Vakuum gezogen. Die erste Membran 16 und die zweite Membran 56 werden zueinander ausgelenkt, so dass das Ventilschließglied 34 vom ersten Ventilsitz 36 abgehoben wird und das Abstandselement 48 von der Rückschlagplatte 44 entfernt wird. In diesem Betriebszustand nimmt die Rückschlagplatte 44 ihre normale Funktion als Rückschlagventil auf und Luft kann vom Einlass 22 zum Auslass 24 strömen, während der umgekehrte Weg durch die Rückschlagplatte 44 gesperrt wird. Soll keine Luft mehr gefördert werden oder wird der Verbrennungsmotor im Folgenden ausgestellt, gelangt Luft in die Steuerkammer 12, so dass die Federkräfte die Stellung der Ventilstange 32 und des Abstandselementes 48 bestimmen. Dies hat zur Folge, dass das Ventilschließglied 34 gegen seinen Ventilsitz 36 bewegt wird und diesen verschließt und das Abstandselement 48 gegen die Rückschlagplatte 44 gedrückt wird und diese vom Ventilsitz 42 entfernt. Gleichzeitig wird die Membran 56 gegen die Vorsprünge 71 gedrückt. Hierdurch können die am Auslass 24 vorhandenen Abgase und die im Abgas vorhandenen Schmutzstoffe sowie anfallende Kondensate sich weder im Anschlagbereich der Rückschlagplatte 44 am zweiten Ventilsitz 42 anlagern noch an der Auflage der Membran 56 auf der Grundfläche 58 , da das Kondensat aus diesem Bereich zuvor über den Ablauf 72 abgeführt wird. Entsprechend wird die Funktionsfähigkeit der Abstandselemente über einen langen Zeitraum zuverlässig aufrecht erhalten.

Es sollte deutlich sein, dass der Schutzbereich des vorliegenden Hauptanspruchs nicht auf das beschriebene Ausführungsbeispiel beschränkt ist. So können die Vorsprünge selbstverständlich bei einem anderen Aufbau des Ventils auch an einer zur mit der Ventilstange verbundenen Membran gegenüberliegenden Grundfläche ausgebildet werden, so dass deren Funktionsfähigkeit sichergestellt wird. In diesem Fall ist beispielsweise nur eine Membran im Aktorraum, wobei der untere Teilraum mit dem Einlass verbunden ist und durch die Grundfläche mit den Vorsprüngen begrenzt ist, während der obere Teilraum als Steuerraum dient. Selbstverständlich sind auch Änderungen bezüglich des Aufbaus der verschiedenen Teile der Ventilvorrichtung wie dem Gehäuse, dem Abstandselement oder der Befestigungselemente denkbar.

## Patentansprüche

1. Ventilvorrichtung für eine Verbrennungskraftmaschine mit
einem Gehäuse (20) mit einem Einlass (22) und einem Auslass (24),
einem Ventilschließglied (34), welches auf einen Ventilsitz (36) absenkbar und vom Ventilsitz (36) abhebbar ist,
einem pneumatisch betätigtem Aktor (10), über welchen das Ventilschließglied (34) bewegbar ist, und welcher zumindest eine Membran (16; 56) aufweist, welche im Gehäuse (20) eingespannt ist und einen Aktorraum (11) in einen ersten Teilraum (12) und einen zweiten Teilraum (57) teilt,
**dadurch gekennzeichnet, dass**
an einer Grundfläche (58) des Gehäuses (20) zumindest ein sich axial von der Grundfläche (58) in Richtung der Membran (16; 56) erhebender Vorsprung (71) ausgebildet ist, auf dem die Membran (16; 56) in zumindest einer Ihrer Endstellungen am Gehäuse (20) aufliegt,
wobei in der Grundfläche (58) ein Ablauf (72) ausgebildet ist, über den eine fluidische Verbindung zwischen dem zweiten Teilraum (57) und dem Einlass (22) oder Auslass (24) besteht.

2. Ventilvorrichtung für eine Verbrennungskraftmaschine nach Anspruch 1,
**dadurch gekennzeichnet, dass**
der zweite Teilraum (57) durch die Membran (56) und eine zur Membran (56) gegenüberliegende Grundfläche (58) des Gehäuses (20) begrenzt ist.

3. Ventilvorrichtung für eine Verbrennungskraftmaschine nach Anspruch 1 oder 2,
**dadurch gekennzeichnet, dass**
sich der Ablauf (72) von einer geodätisch tiefsten Position der Grundfläche (58) aus in Richtung des Einlasses (22) oder des Auslasses (24) erstreckt und eine den Ablauf (72) begrenzende Wand (74) zum Einlass (22) oder zum Auslass (24) hin abfallend ausgebildet ist.

4. Ventilvorrichtung für eine Verbrennungskraftmaschine nach einem der vorhergehenden Ansprüche,
**dadurch gekennzeichnet, dass**
sich der zumindest eine Vorsprung (71) von der Grundfläche (58) in eine geodätisch über der Grundfläche (58) liegende Position erstreckt.

5. Ventilvorrichtung für eine Verbrennungskraftmaschine nach einem der vorhergehenden Ansprüche,
**dadurch gekennzeichnet, dass**
sich von der Grundfläche (58) mehrere Vorsprünge (71) in Richtung der Membran (56) erstrecken, welche gleichmäßig über den Umfang der Grundfläche (58) verteilt sind.

6. Ventilvorrichtung für eine Verbrennungskraftmaschine nach einem der vorhergehenden Ansprüche,
**dadurch gekennzeichnet, dass**
die Ventilvorrichtung eine Ventilstange (32) aufweist, über die die Membran (16) mit dem Ventilschließglied (34) verbunden ist.

7. Ventilvorrichtung für eine Verbrennungskraftmaschine nach einem der Ansprüche 1 bis 5,
**dadurch gekennzeichnet, dass**
die Ventilvorrichtung eine Rückschlagplatte (44) aufweist, welche über eine Federkraft in Richtung eines zweiten Ventilsitzes (42) belastet ist, und einen Durchströmungsquerschnitt (40) zwischen dem Einlass (22) und dem Auslass (24) aufweist, welcher durch das Ventilschließglied (34) und die Rückschlagplatte (44) freigebbar oder verschließbar ist, und zumindest ein pneumatisch betätigbares Abstandselement (48) aufweist, über welches die Rückschlagplatte (44) bei auf dem ersten Ventilsitz (36) aufliegendem Ventilschließglied (34) entgegen der Federkraft vom zweiten Ventilsitz (42) abgehoben ist, wobei das Abstandselement (48) mit der Membran (56) verbunden ist, welche in zumindest einer Ihrer Endstellungen am Gehäuse (20) auf den Vorsprüngen (71) aufliegt.

8. Ventilvorrichtung für eine Verbrennungskraftmaschine nach Anspruch 7,
**dadurch gekennzeichnet, dass**
das Abstandselement (48) durch eine Öffnung (55) in der Grundfläche (58) ragt, welche an der zur Membran (56) weisenden Seite durch den sich in Richtung der Membran (56) axial erhebenden Vorsprung (71) radial begrenzt ist.

9. Ventilvorrichtung für eine Verbrennungskraftmaschine nach Anspruch 7 oder 8,
**dadurch gekennzeichnet, dass**
die Ventilvorrichtung eine erste Membran (16) aufweist, die mit der Ventilstange (32) verbunden ist und eine zweite Membran (56) aufweist, die mit dem zumindest einen Abstandselement (48) verbunden ist und welche in zumindest einer ihrer Endstellungen am Gehäuse (20) auf den Vorsprüngen (71) aufliegt, wobei die erste Membran (16) und die zweite Membran (56) eine Steuerkammer (12) des pneumatischen Aktors (10) begrenzen, welche den ersten Teilraum bildet.

10. Ventilvorrichtung für eine Verbrennungskraftmaschine nach einem der Ansprüche 7 bis 9,
**dadurch gekennzeichnet, dass**
das Abstandselement (48) mindestens einen Arm (54) aufweist, der gegen die Rückschlagplatte (44) bewegbar ist.

11. Ventilvorrichtung für eine Verbrennungskraftmaschine nach einem der Ansprüche 9 oder 10,
**dadurch gekennzeichnet, dass**
die zweite Membran (56) an ihrem Innenumfang und an ihrem Außenumfang zwischen dem Gehäuse (20) und einem Befestigungselement (60, 70) eingespannt ist.

12. Ventilvorrichtung für eine Verbrennungskraftmaschine nach einem der Ansprüche 10 oder 11,
**dadurch gekennzeichnet, dass**
drei Arme (54) um 120° versetzt zueinander angeordnet sind, die durch drei Öffnungen (55) in der Grundfläche (58) ragen, die jeweils an der zur Membran (56) weisenden Seite durch die sich in Richtung der Membran (56) axial erhebenden Vorsprünge (71) radial begrenzt sind.

## Claims

1. Valve device for an internal combustion engine comprising
a housing (20) with an inlet (22) and an outlet (24),
a valve closure member (34) which can be lowered onto a valve seat (36) and lifted off the valve seat (36)
a pneumatically actuated actuator (10), via which the valve closing member (34) is movable, and which comprises at least one diaphragm (16; 56) which is clamped in the housing (20) and divides an actuator space (11) into a first partial space (12) and a second partial space (57),
**characterized in that**
at least one projection (71) is formed on a base surface (58) of the housing (20), which projection rises axially from the base surface (58) in the direction of the diaphragm (16; 56) and on which the diaphragm (16; 56) rests in at least one of its end positions on the housing (20),
wherein a drain (72) is configured in the base surface (58), via which a fluidic connection exists between the second partial space (57) and the inlet (22) or the outlet (24).

2. Valve device for an internal combustion engine according to claim 1,
**characterized in that**
the second partial space (57) is delimited by the diaphragm (56) and a base surface (58) of the housing (20) opposite the diaphragm (56).

3. Valve device for an internal combustion engine according to claim 1 or 2,
**characterized in that**
the drain (72) extends from a geodetically lowest position of the base surface (58) in the direction of the inlet (22) or the outlet (24) and a wall (74) delimiting the drain (72) is configured to slope towards the inlet (22) or the outlet (24).

4. Valve device for an internal combustion engine according to one of the preceding claims,
**characterized in that**
the at least one projection (71) extends from the base surface (58) to a position geodetically above the base surface (58).

5. Valve device for an internal combustion engine according to one of the preceding claims,
**characterized in that**
a plurality of projections (71) extend from the base surface (58) in the direction of the diaphragm (56), which are uniformly distributed over the circumference of the base surface (58).

6. Valve device for an internal combustion engine according to one of the preceding claims,
**characterized in that**
the valve device comprises a valve rod (32) via which the diaphragm (16) is connected to the valve closure member (34).

7. Valve device for an internal combustion engine according to any one of claims 1 to 5,
**characterized in that**
the valve device comprises a check plate (44) which is loaded via a spring force in the direction of a second valve seat (42) and comprises a through-flow cross-section (40) between the inlet (22) and the outlet (24) which can be opened or closed by the valve closing member (34) and the check plate (44) and comprises at least one pneumatically actuable spacer element (48) by means of which the check plate (44) is lifted from the second valve seat (42) against the spring force when the valve closing member (34) rests on the first valve seat (36), wherein the spacer element (48) is connected to the diaphragm (56) which rests on the projections (71) in at least one of its end positions on the housing (20).

8. Valve device for an internal combustion engine according to claim 7,
**characterized in that**
the spacer element (48) projects through an opening (55) in the base surface (58), which is radially delimited on the side facing the diaphragm (56) by the projection (71) rising axially in the direction of the diaphragm (56).

9. Valve device for an internal combustion engine according to claim 7 or 8,
**characterized in that**
the valve device comprises a first diaphragm (16) which is connected to the valve rod (32) and comprises a second diaphragm (56) which is connected to the at least one spacer element (48) and which, in at least one of its end positions on the housing (20), rests on the projections (71), wherein the first diaphragm (16) and the second diaphragm (56) delimit a control chamber (12) of the pneumatic actuator (10) which defines the first partial space.

10. Valve device for an internal combustion engine according to any one of claims 7 to 9,
**characterized in that**
the spacer element (48) comprises at least one arm (54) movable against the check plate (44).

11. Valve device for an internal combustion engine according to one of claims 9 or 10,
**characterized in that**
the second diaphragm (56) is clamped at its inner circumference and at its outer circumference between the housing (20) and a fastening element (60, 70).

12. Valve device for an internal combustion engine according to one of claims 10 or 11,
**characterized in that**
three arms (54) are arranged offset from one another by 120°, which project through three openings (55) in the base surface (58), which are respectively delimited radially on the side facing the diaphragm (56) by the projections (71) rising axially in the direction of the diaphragm (56).

## Revendications

1. Appareil de vanne pour un moteur à combustion interne comprenant
un boîtier (20) avec une entrée (22) et une sortie (24),
un élément de fermeture de vanne (34) qui peut être abaissé sur un siège de vanne (36) et soulevé du siège de vanne (36).
un actuateur (10) à commande pneumatique, par lequel l'élément de fermeture de vanne (34) est déplaçable, et qui comprend au moins une membrane (16 ; 56) serrée dans le boîtier (20) et divisant un espace d'actionnement (11) en un premier espace partiel (12) et un second espace partiel (57),
**caractérisé en ce que**
au moins une saillie (71) est formée sur une surface de base (58) du boîtier (20), laquelle saillie s'élève axialement à partir de la surface de base (58) en direction de la membrane (16 ; 56) et sur laquelle la membrane (16 ; 56) repose dans au moins une de ses positions terminales sur le boîtier (20), dans lequel un drainage (72) est configuré dans la surface de base (58), par lequel une connexion fluidiquement existe entre le deuxième espace partiel (57) et l'entrée (22) ou la sortie (24).

2. Appareil de vanne pour un moteur à combustion interne selon la revendication 1,
**caractérisé en ce que**
le deuxième espace partiel (57) est délimité par la membrane (56) et une surface de base (58) du boîtier (20) opposée à la membrane (56).

3. Appareil de vanne pour un moteur à combustion interne selon la revendication 1 ou 2,
**caractérisé en ce que**
le drainage (72) s'étend à partir d'une position géodésique la plus basse de la surface de base (58) en direction de l'entrée (22) ou de la sortie (24) et une paroi (74) délimitant le drainage (72) est configurée pour s'incliner vers l'entrée (22) ou la sortie (24).

4. Appareil de vanne pour un moteur à combustion interne selon l'une des revendications précédentes,
**caractérisé en ce que**
la au moins une saillie (71) s'étend depuis la surface de base (58) jusqu'à une position géodésique au-dessus de la surface de base (58).

5. Appareil de vanne pour un moteur à combustion interne selon l'une des revendications précédentes,
**caractérisé en ce que**
une pluralité de saillies (71) s'étendent à partir de la surface de base (58) en direction de la membrane (56), qui sont uniformément réparties sur la circonférence de la surface de base (58).

6. Appareil de vanne pour un moteur à combustion interne selon l'une des revendications précédentes,
**caractérisé en ce que**
l'appareil de vanne comprend une tige de vanne (32) par laquelle la membrane (16) est connectée à l'organe de fermeture de la vanne (34).

7. Appareil de vanne pour un moteur à combustion interne selon l'une des revendications 1 à 5,
**caractérisé en ce que**
l'appareil vanne comprend une plaque de retenue (44) qui est sollicitée par une force de ressort en direction d'un second siège de vanne (42) et comprend une section de passage (40) entre l'entrée (22) et la sortie (24)
qui peut être ouvert ou fermé par l'élément de fermeture de la vanne (34) et la plaque de contrôle (44) et comprend au moins un élément d'écartement (48) pneumatiquement actionnable au moyen duquel la plaque de contrôle (44) est soulevée du second siège de vanne (42) contre la force du ressort lorsque l'élément de fermeture de la vanne (34) repose sur le premier siège de vanne (36), dans lequel l'élément d'écartement (48) est connecté à la membrane (56) qui repose sur les saillies (71) dans au moins l'une de ses positions terminales sur le boîtier (20).

8. Appareil de vanne pour un moteur à combustion interne selon la revendication 7,
**caractérisé en ce que**
l'élément d'écartement (48) fait saillie à travers une ouverture (55) dans la surface de base (58), qui est délimitée radialement sur le côté faisant face à la membrane (56) par la saillie (71) s'élevant axialement en direction de la membrane (56).

9. Appareil de vanne pour un moteur à combustion interne selon la revendication 7 ou 8,
**caractérisé en ce que**
l'appareil de vanne comprend une première membrane (16) qui est connectée à la tige de vanne (32) et comprend une deuxième membrane (56) qui est connectée à l'au moins un élément d'écartement (48) et qui, dans au moins une de ses positions terminales sur le boîtier (20), repose sur les saillies (71), dans lequel la première membrane (16) délimite une chambre de contrôle (12) de l'actionneur pneumatique (10) qui comprend le premier espace partiel.

10. Appareil de vanne pour un moteur à combustion interne selon une des revendications 7 à 9,
**caractérisé en ce que**
l'élément d'écartement (48) comprend au moins un bras (54) déplaçable contre la plaque de contrôle (44).

11. Appareil de vanne pour moteur à combustion interne selon l'une des revendications 9 ou 10,
**caractérisé en ce que**
la deuxième membrane (56) est serrée à sa circonférence intérieure et à sa circonférence extérieure entre le boîtier (20) et un élément de fixation (60, 70).

12. Appareil de vanne pour moteur à combustion interne selon l'une des revendications 10 ou 11,
**caractérisé en ce que**
trois bras (54) sont arrangés décalés de 120° les uns par rapport aux autres, qui font saillie à travers trois ouvertures (55) dans la surface de base (58), lesquelles sont respectivement délimitées radialement du côté de la membrane (56) par les saillies (71) s'élevant axialement en direction de la membrane (56).
